# EUROPEAN PATENT APPLICATION

(11) **EP 4 726 686 A1**
(43) Date of publication of application: **15.04.2026**
(21) Application number: 24206211.5
(22) Date of filing: 11.10.2024
(51) Int. Cl.: G07C 9/00, H04L 43/00, H04L 67/12, G08B 29/18

(54) **ENABLING CONFIGURATION OF ACCESS CONTROL DEVICES**

(71) Applicant: Assa Abloy Limited, Willenhall, West Midlands WV13 3PW (GB)
(72) Inventor: FABJANSKI, Krzysztof Grzegorz, Bielsko-Biala (PL); KOSTYK, Andrzej Bohdan, Wieliczka (PL); HAJDUK, Michal Rafal, Krakow (PL)
(74) Representative: Kransell & Wennborg KB

(57) **Abstract**

It is provided a method for enabling configuration of access control devices (12a-e). The method comprises: obtaining (40) a sequence of image frames (21, 21a-n); finding (43) possible install locations (13a-e) for access control devices (12a-e); obtaining (45) wireless reception data (25) being indicative of at least one wireless transmission (26a, 26a', 26a", 26m) from an access control device (12a-e) at the installation site (8); and associating (47), for each access control device (12a-e) being a source access control device (12a-e) of at least one wireless transmission (26a, 26a', 26a", 26m) in the wireless reception data (25), the source access control device (12a-e) with a single install location (13a-e) of the possible install locations (13a-e), based on finding a possible install location in the sequence of image frames corresponding to a wireless transmission (26a, 26a', 26a", 26m) of the source access control device (12a-e).

## Description

### TECHNICAL FIELD

The present disclosure relates to the field of access control devices, and in particular to enabling configuration of access control devices.

### BACKGROUND

Access control systems are widely used to regulate and manage entry to secured areas, particularly in commercial, industrial, and residential settings. These systems often consist of multiple access control devices, such as electronic locks, RFID readers, or biometric sensors, installed at various entry points of a facility. The proper installation and configuration of these devices is critical to ensure secure and efficient access control. Typically, the installation of access control devices involves manually selecting appropriate locations at the installation site and configuring the devices for optimal performance. This can be time-consuming and error-prone, particularly in complex environments with multiple access points.

In conventional systems, determining the install locations for access control devices requires on-site technicians to analyse architectural layouts or maps of the premises. These technicians may also need to perform tests, such as measuring wireless signal strength, to ensure that the access control devices are installed at positions where they can function optimally. After the physical installation, each device must be configured, including linking the device's identity to its installed location and ensuring that it communicates effectively with other devices in the system. This manual process can lead to inaccuracies, inefficiencies, and extended installation times.

### SUMMARY

One object is to improve how access control devices are installed, to simplify the process and make it less prone to errors.

According to a first aspect, it is provided a method for enabling configuration of access control devices at an installation site. The method comprises: obtaining a sequence of image frames captured at the installation site; finding, in the sequence of image frames, possible install locations for access control devices; obtaining wireless reception data being indicative of at least one wireless transmission from an access control device at the installation site; and associating, for each access control device being a source access control device of at least one wireless transmission in the wireless reception data, the source access control device with a single install location of the possible install locations, based on finding a possible install location in the sequence of image frames corresponding to a wireless transmission of the source access control device.

The associating may comprise associating an identity of each source access control device with its associated install location.

The wireless reception data may have been received in a time period at least partly overlapping in time with when the sequence of image frames was captured.

The sequence of images may form part of a captured video sequence.

The method may further comprise: deriving a map of at least part of the installation site based on the sequence of image frames; and positioning each of the found possible install locations on the map.

The method may further comprise: obtaining a pre-generated map of the installation site, the pre-generated map comprising possible install locations; and positioning each of the found possible install locations on the map.

The sequence of image frames may comprise time data for deriving a frame time for each image frame. In this case, the wireless reception data comprises a time indicator associated with each wireless transmission of the wireless reception data. Furthermore, the associating comprises comparing the frame times of the image frames and the transmission time indication of the at least one wireless transmission of the source access control device.

At least one of the access control devices may be an electronic lock, and at least one of the possible install locations is provided by an openable barrier whose openable state is controllable by an electronic lock.

The method may be performed by a mobile acquisition device. The sequence of image frames is then captured by the acquisition device and the wireless reception data is based on wireless transmissions received by the acquisition device.

The method may further comprise obtaining positions and orientations of the acquisition device for when the acquisition device captured the sequence of image frames and received the wireless reception data. In this case, the associating is based on the obtained positions and orientations of the acquisition device.

The method may further comprise, for at least one of the source access control devices: obtaining configuration data to be applied for an access control device installed in the install location of the source access control device; and applying configuration data to the source access control device.

The step of finding possible install locations may be based on a machine learning model that is pre-trained to recognise install location in image frames.

According to a second aspect, it is provided a configuration enablement device for enabling configuration of access control devices at an installation site. The configuration enablement device comprising: processing circuitry; and memory circuitry storing instructions that, when executed by the processing circuitry, cause the configuration enablement device to: obtain a sequence of image frames captured at the installation site; find, in the sequence of image frames, possible install locations for access control devices; obtain wireless reception data being indicative of at least one wireless transmission from an access control device at the installation site; and associate, for each access control device being a source access control device of at least one wireless transmission in the wireless reception data, the source access control device with a single install location of the possible install locations, based on finding a possible install location in the sequence of image frames corresponding to a wireless transmission of the source access control device.

According to a third aspect, it is provided a mobile acquisition device comprising the configuration enablement device according to the second aspect.

According to a fourth aspect, it is provided a computer program for enabling configuration of access control devices at an installation site. The computer program comprises computer program code which, when executed on a configuration enablement device causes the configuration enablement device to: obtain a sequence of image frames captured at the installation site; find, in the sequence of image frames, possible install locations for access control devices; obtain wireless reception data being indicative of at least one wireless transmission from an access control device at the installation site; and associate, for each access control device being a source access control device of at least one wireless transmission in the wireless reception data, the source access control device with a single install location of the possible install locations, based on finding a possible install location in the sequence of image frames corresponding to a wireless transmission of the source access control device.

According to a fifth aspect, it is provided a computer program product comprising a computer program according to the fourth aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied;
Fig 2 is a schematic diagram illustrating how a possible install location can be identified in an image frame captured by the portable device of Fig 1;
Fig 3 is a schematic diagram illustrating how associations between image frames and wireless transmissions can be made;
Figs 4A-B are schematic diagrams illustrating embodiments of where the configuration enablement device can be implemented;
Fig 5 is a schematic diagram illustrating a map that has been derived based on image frames captured by the portable device as it moves along the path of the accessible physical space;
Figs 6A-C are flow charts illustrating embodiments of methods for enabling configuration of access control devices at an installation site, performed by the configuration enablement device;
Fig 7 is a schematic diagram illustrating components of the configuration enablement device of Figs 4A-B; and
Fig 8 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, it is provided a way for mapping access control devices to one of several possible install locations at an installation site, based on image data and wireless reception data. Specifically, visual data in image frames from the installation site is used to find possible install locations, which are then evaluated along with wireless transmission data from access control devices. When the wireless transmission data corresponds to a possible install location, this is interpreted as the access control device being installed there. This approach reduces installation complexity, improves accuracy, and greatly reduces the need for manual intervention.

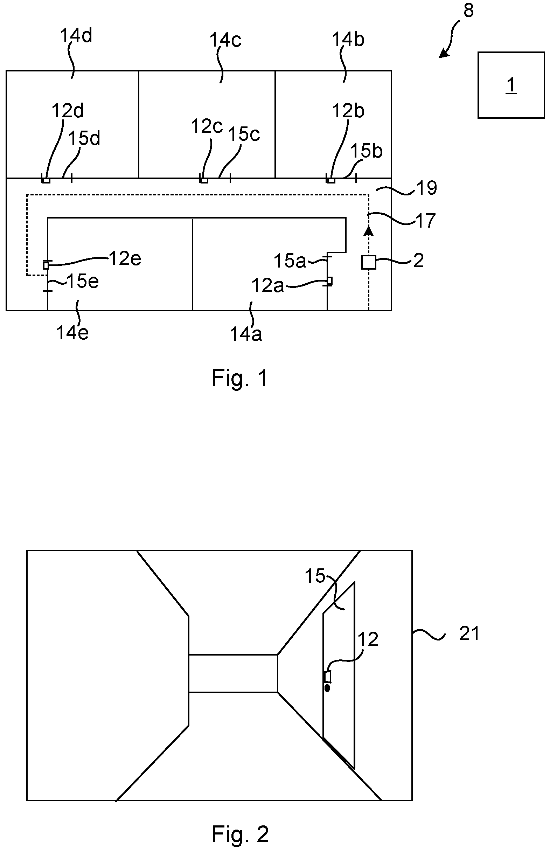

Fig 1 is a schematic diagram illustrating an environment in which embodiments presented herein can be applied. A number of restricted physical spaces 14a-e are provided at an installation site 8 where access control devices, such as electronic locks, are to be installed. Each restricted physical space 14a-e can e.g. be a hotel room, a cruise ship cabin, a flat, an office space, etc. Outside the restricted physical spaces 14a-e, there is an accessible physical space 19, which in this example is a corridor.

At the installation site 8, there are a number of possible install locations 15a-e. In this example, the install locations 15a-e are the doors separating each restricted physical space 14a-r from the accessible physical space 19. In the scenario in Fig 1, respective access control devices 12a-e have been mounted to a respective one of the possible install locations 15a-e. While the possible install locations are here exemplified as doors, the possible install locations can be any location where an access control device could be installed. For instance, the possible install locations can be a wall section next to a door.

Each access control device 12a-e regularly emits a wireless transmission. The wireless transmission can be a broadcast signal announcing presence of the access control device 12a-e, e.g. as an advertisement or other broadcast transmission in compliance with a wireless communication protocol such as BLE, Wi-Fi, UWB (ultra-wideband), etc. The wireless transmission contains an identifier of the access control device 12a-e.

A mobile acquisition device 2, e.g. in the form of a smartphone, tablet computer, embedded communication device, etc., is movable along a path 17 throughout the accessible physical space 19. The acquisition device 2 is mobile, and can be moved along the path 17 by an operator or by an unmanned vehicle, such as a self-propagating or remote-controlled vehicle. When the acquisition device 2 moves along the path 17, the acquisition device 2 captures image frames (as several distinct images or as part of a video file or video stream) where the possible install locations can be identified based on image analysis.

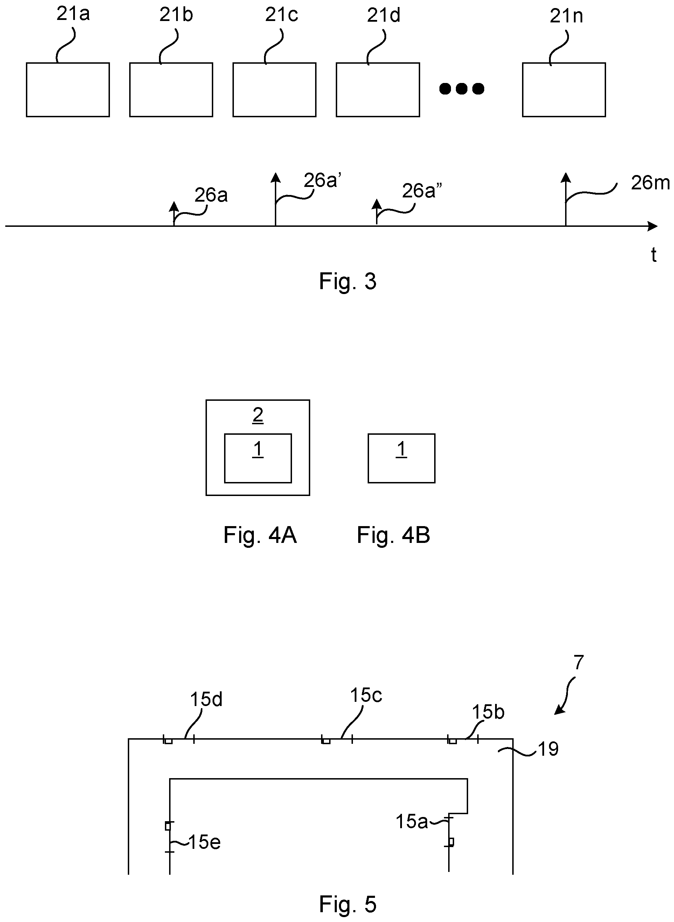

According to embodiments presented herein, the mounted location of each access control device 12a-e is determined based on associating the access control device with a possible install location (identified from the image frames) where a transmission from the access control device 12a-e corresponds to the possible install location. This association occurs in a configuration enablement device 1 which can be separate from the acquisition device 2 (as shown in Fig 1), or the configuration enablement device 1 can be part of the acquisition device 2. The implementation of the configuration enablement device 1 is described in more detail below with reference to Figs 4A-B.

It is to be noted that the number of access control devices and possible install locations in Fig 1 is only an example; there can be fewer or more access control devices and possible install locations than those shown in the example of Fig 1.

Fig 2 is a schematic diagram illustrating how a possible install location can be identified in an image frame captured by the acquisition device of Fig 1.

An image frame 21 is shown where the acquisition device 2 captures the image in the accessible physical space 19, i.e. the corridor, of Fig 1 at a point along the path 17 of Fig 1. In the example of Fig 2, the image frame 21 could be captured at a point in Fig 1 where the acquisition device 2 approaches the fourth possible install location 15d. A possible install location 15 in the form of a door is shown on the right of the image frame 21 and can be identified using image processing of the image frame 21. An access control device 12 has been mounted at the possible install location 15.. The access control device 12 emits a wireless transmission that is received by the acquisition device 2. During the association stage, where a particular access control device 12 is associated with a particular possible install location 15, the wireless transmission, together with the image frame 21 depicting the possible install location, are used to determine the association.

It is to be noted that, in some embodiments, the identification process can differentiate between the access control device 12 itself, like a lock mounted on a door, or a reader mounted on the wall just beside the door, and the access control object which is controlled by the said access control device, and which is in this example the door 15. In such a case, the possible install location identified using image processing is the visible part of the access control device 12 itself (knob, housing, etc.).

Fig 3 is a schematic diagram illustrating how associations between image frames and wireless transmissions can be made. The horizontal axis represents time. A number of image frames 21a-n are shown at the top. Below, wireless transmissions 26a, 26a', 26a", 26m are shown, where the size of the arrows indicates the received power of the wireless transmission, received by the acquisition device 2.

In this example, there are n image frames and wireless transmissions from m access control devices. As the acquisition device 2 of Fig 1 traverses the accessible physical space, wireless transmissions from the access control device will be received by the acquisition device 2. At the same time, the acquisition device 2 will continue to capture image frames. It is thereby possible to associate wireless transmissions from each access control device with a possible install location.

Each access control device can transmit multiple wireless transmissions. For instance, in the example shown, there is a first wireless transmission 26a from an access control device in a time corresponding to the second image frame 21b, a second wireless transmission 26a' from the same access control device in a time corresponding to the third image frame 21c, and a third wireless transmission 26" in a time corresponding to the fourth image frame 21d. The image frame shown in Fig 2 could correspond to the second image frame 21b of Fig 3, prior to peak received power. The power of the transmission signal, as received by the acquisition device 2, will be at its peak when the acquisition device 2 is adjacent to the access control device in question. This will occur at a time after the image frame of Fig 2, since it is there seen that the access control device is in front of the acquisition device.

It is to be noted that there might not be a one-to-one relationship between wireless transmissions and image frames. Nevertheless, the principles illustrated by Fig 3 are still applicable. For instance, the first wireless transmission 26a might correspond in time to the first image frame 21a, and the third wireless transmission 26a" may correspond in time to an image frame after the fourth image frame 21d. This does not change the ability to associate an access control device with a possible install location.

The process of association will continue for a number of access control devices as the acquisition device 2 traverses the accessible physical space 19.

It is to be noted during the association, time is not necessarily a parameter that is used for the associating. The position and orientation of acquisition device 2 when traversing the installation site 8 can also be acquired and coupled to respective wireless transmissions and image frames. Such spatial data acquisition is can e.g. be acquired from an inertial measurement unit (IMU), which can form part of the acquisition device 2. As known in the art *per se,* the IMU can comprise a three-dimensional accelerometer and three-axes gyroscope. The accuracy of this data can also be increased if the installation site 8 comprises communication hubs or BLE beacons, which communicate their own spatial position (absolute and relative) to the acquisition device 2.

Figs 4A-B are schematic diagrams illustrating embodiments of where the configuration enablement device 1 can be implemented.

In Fig 4A, the configuration enablement device 1 is shown as implemented in the acquisition device 2. The acquisition device 2 is thus the host device for the configuration enablement device 1 in this implementation.

In Fig 4B, the configuration enablement device 1 is shown as implemented as a stand-alone device. For instance, the configuration enablement device 1 can be implemented in a server that is in communication with the acquisition device 2. In this implementation, the configuration enablement device 1 thus does not have a host device. It is to be noted that the configuration enablement device 1 can optionally be implemented across multiple physical devices (e.g. multiple servers).

It is also possible with a combination of the embodiments shown in Fig 4A and Fig 4B, where some functions of the configuration enablement device 1 are performed in the acquisition device 2 and other functions of the configuration enablement device 1 are performed in a stand-alone device such a server.

Fig 5 is a schematic diagram illustrating a derived map 7 that has been derived based on image frames captured by the acquisition device 2 as it moves along the path 17 of the accessible physical space 19 (see Fig 1). The derived map 7 can include features such as the possible install locations and walls that are visible from the accessible physical space 19. Depending on the level of granularity of the image processing step, the map can include different object/markers to identify between the access control devices 12a-e (like a lock mounted on a door, or a reader mounted on the wall just beside the door), and the access control objects (e.g. doors) which are controlled by the access control devices.

However, walls and other features within restricted physical spaces that are not seen from the accessible physical space can naturally not be derived from the image frames, since these are not visible in the image frames captured by the acquisition device 2. Nevertheless, the map can be of valuable assistance when setting up an access control system comprising a large number of access control devices.

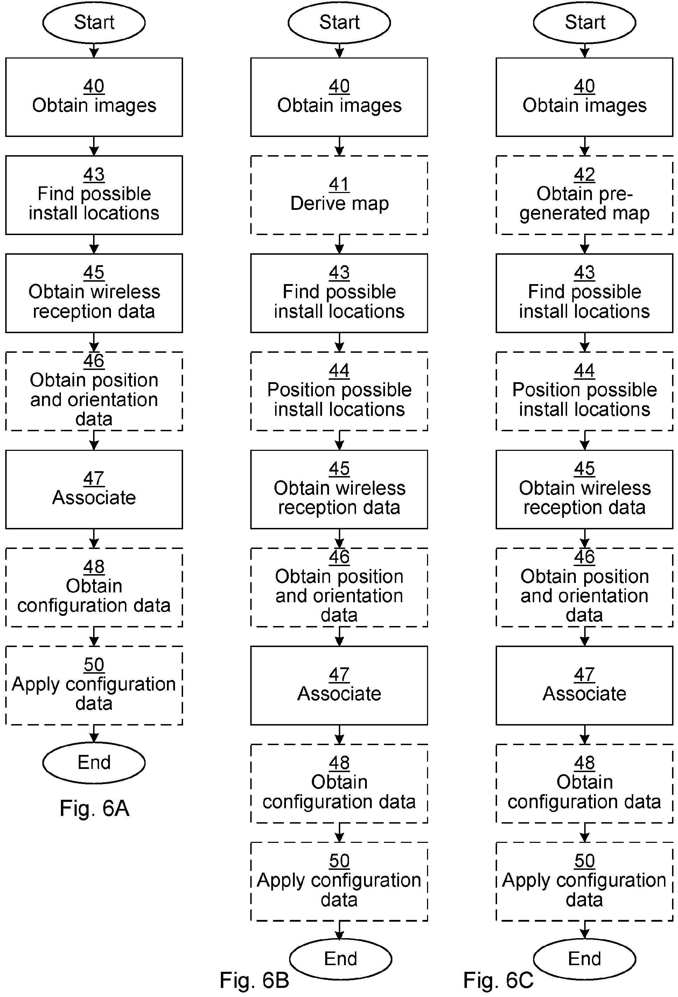

Figs 6A-C are flow charts illustrating embodiments of methods for enabling configuration of access control devices at an installation site. The method can be performed by a configuration enablement device 1. At least one of the access control devices 12a-e can be an electronic lock. In one embodiment, at least one of the access control devices 12a-e is a credential reader, sensor device, or any other device used in an access control system. At least one of the possible install locations 15a-e can be provided by an openable barrier (e.g. door or window) whose openable state is controllable by an electronic lock 12a-e. First, embodiments covered by Fig 6A will be described.

In an *obtain images* step 40, the acquisition device 2 obtains a sequence of image frames 21, 21a-n captured at the installation site 8. For instance, the sequence of images form part of a captured video sequence, e.g. a video stream or a video file. Optionally, the sequence of image frames comprises time data for deriving a frame time 22 for each image frame.

In one embodiment, the configuration enablement device 1 is an acquisition device 2 (as illustrated in Fig 4A). In this case, the sequence of image frames 21, 21a-n is captured by the configuration enablement device 1. When the configuration enablement device 1 is not part of a portable device (as illustrated in Fig 4B), the acquisition device 2 can still capture the image frames and provide these to the configuration enablement device 1, e.g. when implemented in a server.

In a *find possible install locations* step 43, the configuration enablement device 1 finds, in the sequence of image frames 21, 21a-n, possible install locations 13a-e for access control devices 12a-e. The possible install locations can be identified using image processing of the sequence of image frames. In one embodiment, the configuration enablement device 1 is capable of identifying access control devices 12 in the image frames and can then find the (actual) install location of the access control device 12 in the image frames. It is to be noted that in this case, the actual install location is then also a possible install location, since it is clearly possible to install an access control device in that (actual) install location. In one embodiment, the possible install locations are found based on one-dimensional or two-dimensional barcodes found in the image frames, the barcodes being provided at each possible install location. In one embodiment, the possible install locations are found based on optical character recognition of alphanumeric identifiers of each restricted physical space that are found in the image frames. Such alphanumeric identifiers can e.g. be room numbers, etc.

The finding of the possible install locations can be based on traditional image analysis or based on a machine learning model, such as a convolutional neural network (CNN), that is pre-trained on labelled training data where an operator has labelled the location of a possible install location in a large number of images. Such a system can be taught to recognise the installed control devices 12a-e on the image frames, like the knob of a cylinder on a door, or the housing of a reader installed on the wall beside a door.

Optionally, the source of the sequence of image frames (e.g. the acquisition device 2) is positioned at the same time that the sequence of image frames is captured. Such positioning can e.g. be based on beacon devices, such as Bluetooth beacons. This positioning can be of assistance in finding the possible install locations, especially when the possible install locations are indicated on a map.

In an *obtain wireless reception data* step 45, the configuration enablement device 1 obtains wireless reception data 25 by receiving wireless transmissions from one or more access control devices. The wireless reception data 25 is thus indicative of at least one wireless transmission from an access control device 12a-e at the installation site 8. Furthermore, the wireless reception data was received in a time period that at least partly overlaps (in time) with when the sequence of image frames 21, 21a-n was captured.

Optionally, the wireless reception data 25 comprises a time indicator associated with each wireless transmission of the wireless reception data 25. The time indicator can e.g. be in the form of a time stamp, indicating when the wireless transmission was transmitted by the access control device and/or when the wireless transmission was received.

When the configuration enablement device 1 is an acquisition device (as illustrated in Fig 4A), the wireless reception data 25 is based on wireless transmissions received by the configuration enablement device 1. When the configuration enablement device 1 is not part of a portable device (as illustrated in Fig 4B), the portable device 2 can still receive the wireless transmissions and provide these to the configuration enablement device 1, e.g. when implemented in a server.

In an optional *obtain position and orientation data* step 46, the configuration enablement device 1 obtains positions and orientations of the acquisition device 2 for when the acquisition device captured the sequence of image frames 21, 21an and received the wireless reception data 25.

In an *associate* step 47, the configuration enablement device 1, evaluates all access control devices 12a-e that are a source access control device 12a-e of at least one wireless transmission in the wireless reception data 25. For each such source access control device 12a-e, the configuration enablement device 1 associates the source access control device, with a single install location 13a-e of the possible install locations 13a-e. Each such association is based on finding a possible install location in the sequence of image frames corresponding to a wireless transmission of the source access control device 12a-e, e.g. as explained above with reference to Figs 2 and 3. The association can be rule-based or based on a machine-learning model trained to perform this association. Such a machine learning model can be a CNN trained on labelled data where an operator has indicated where a possible install location is to be associated with a received wireless transmission.

The associating can comprise associating the identity of each source access control device 12a-e with its associated install location 13a-e. This can be stored in a database. When a map of the installation site is available, the associated install location can be positioned on the map.

In one embodiment, when the frame times and transmission time indications are available, the associating is based on comparing the frame times 22 of the image frames and the transmission time indication of the at least one wireless transmission of the source access control device 12a-e, corresponding to what is illustrated in Fig 3.

When step 46 is performed, the associating 47 can be based on the obtained positions and orientations of the acquisition device 2.

In an optional *obtain configuration data* step 48, the configuration enablement device 1 obtains configuration data to be applied for an access control device installed in the install location of the source access control device 12a-e.

In an optional *apply configuration data* step 50, the configuration enablement device 1 applies configuration data to the source access control device 12a-e.

The configuration data can be obtained and applied for several or even all of the access control device 12a-e that have been associated with possible install locations 13a-e. Since these access control devices are now associated with a location, it can be determined which configuration that should be applied for each one of these access control devices. The configuration can be applied using communication from the configuration enablement device to the access control devices. The configuration itself can be determined automatically based on the location of each access control device, or an operator can manually determine the configuration to be applied for each one of the access control devices. In any case, the configuration is easily determined based on the knowledge of location for each one of the access control devices.

Looking now to Fig 6B, only new or modified steps compared to Fig 6A are described.

In an optional *derive map* step 41, the configuration enablement device 1 derives a map based on the video sequence. This is illustrated in Fig 5 and is described in more detail above. The map is a scalar representation of at least part of the installation site 8, and can e.g. be in the form of a two-dimensional (2D) map or a three-dimensional (3D) map.

In an optional *position possible install locations* step 44, the configuration enablement device 1 positions each of the found possible install locations 13a-e on the map. This allows manual or automatic configuration to be determined, such that this configuration is obtained in the *obtain configuration data* step 48.

Looking now to Fig 6C, only new or modified steps compared to Fig 6A are described.

In an optional *obtain pre-generated map* step 42, the configuration enablement device 1 obtains a pre-generated map of the installation site 8. The pre-generated map is a scalar representation of at least part of the installation site 8, and can e.g. be in the form of a two-dimensional (2D) map or a three-dimensional (3D) map. In one embodiment, the pre-generated map is in the form of CAD (computer-aided design) files of an entire building of the installation site, comprising structural details as generated by architects or other professionals. Depending on the granularity, the map can already comprise possible install locations for the access control devices.

In an optional *position possible install locations* step 44, the configuration enablement device 1 positions each of the found possible install locations 13a-e on the pre-generated map (as described above with reference to Fig 6B). The main difference in this embodiment compared to the one illustrated by Fig 6B, is the source of the map, which is here pre-generated. Hence, the *position possible install locations* step 44 operates in the same manner in both embodiments. It is to be noted also that the pre-generated map can be augmented by the acquired data of the derived map 7, so that it corresponds to the built reality of the installation site (and not only the planned one).

Using embodiments presented hearing, it is very easy to install new access control devices. First, a technician mounts the access control devices in the possible install locations. The access control devices could be generic and do not need to be preconfigured for a particular one of the possible install locations. The technician only ensures that the access control devices are properly mounted, connected and active. Subsequently, potentially by another person at another time, the acquisition device 2 is moved through the space where the access control devices have been mounted. The image frames and the wireless transmissions from the access control devices provided to the configuration enablement device 1), and each access control device is associated with a possible installed location. In a separate step, a security manager accessing the access control server can define how each access control device, uniquely identified by its identity (for example MAC (media access control)-address), is configured depending on its determined installed location. The work of the security manager can be facilitated by the using the derived map (of Fig.5), the pre-generated map or even an augmented combined version of both. The configuration can be applied remotely or locally for each access control device, to enable it secure the restricted physical space by its installed location.

It is to be noted that the term access control device can include any kind of wirelessly active device which is part of the access control system and is installed on site. This includes for example hubs that enable electronic locks to connect to an access control server, BLE beacons that are used to monitor the position of each wireless credential on the site, or even security webcams. If such devices are also acquired and associated with their install locations according the embodiments presented herein, this facilitates the configuration step of the entire access control system. For example, this can allow a security manager to define which hub should be paired with which nearby electronic lock.

Using embodiments presented herein, it is possible to separate the physical installation (mounting) from the configuration, allowing each dedicated specialist (the installing technician on one side and the security manager on the other side) to concentrate only on their domain of excellence. Additionally, by automating the acquisition of the identity and installed position of the access control devices, the risk of human error in the data acquisition process is greatly reduced.

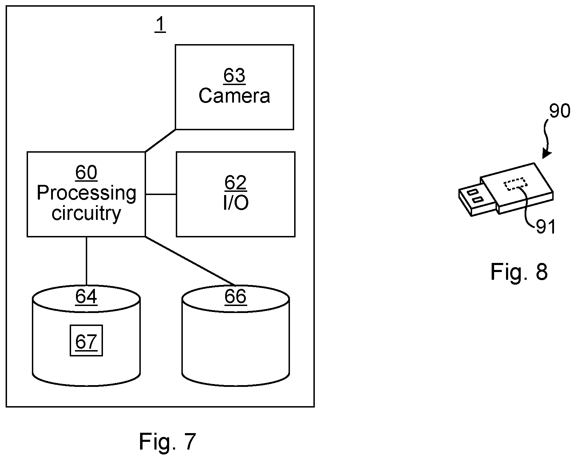

Fig 7 is a schematic diagram illustrating components of the configuration enablement device 1 of Figs 4A-B. It is to be noted that when the is (at least partly) implemented in a host device, one or more of the mentioned components can be shared with the host device. Processing circuitry 60 is provided using any combination of one or more of a suitable central processing unit (CPU), graphics processing unit (GPU), multiprocessor, neural processing unit (NPU), microcontroller, digital signal processor (DSP), etc., capable of executing software instructions 67 stored in memory circuitry 64, which can thus be a computer program product. The processing circuitry 60 could alternatively be implemented using an application specific integrated circuit (ASIC), field programmable gate array (FPGA), etc. The processing circuitry 60 can be configured to execute the method described with reference to Figs 6A-C above.

The memory circuitry 64 can be any combination of random-access memory (RAM) and/or read-only memory (ROM). The memory circuitry 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processing circuitry 60. The data memory 66 can be any combination of RAM and/or ROM.

An I/O interface 62 is provided for communicating with external and/or internal entities using wired communication, e.g. based on Ethernet (particularly when the configuration enablement device 1 is implemented in a server), and/or wireless communication, e.g. Wi-Fi, Bluetooth, Bluetooth Low Energy, and/or a cellular network.

A camera 63 is used to capture image frames to find possible install locations for access control devices. The camera can provide its output as a sequence of individual frames or as a video, e.g. as a video file or a video stream.

Other components of the configuration enablement device 1 are omitted in order not to obscure the concepts presented herein.

Fig 8 shows one example of a computer program product 90 comprising computer readable means. On this computer readable means, a computer program 91 can be stored in a non-transitory memory. The computer program can cause processing circuitry to execute a method according to embodiments described herein. In this example, the computer program product 90 is in the form of a removable solid-state memory, e.g. a Universal Serial Bus (USB) drive. As explained above, the computer program product could also be embodied in a memory of a device, such as the computer program product 64 of Fig 7. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for enabling configuration of access control devices (12a-e) at an installation site (8), the method comprising:
obtaining (40) a sequence of image frames (21, 21a-n) captured at the installation site (8);
finding (43), in the sequence of image frames (21, 21a-n), possible install locations (13a-e) for access control devices (12a-e);
obtaining (45) wireless reception data (25) being indicative of at least one wireless transmission (26a, 26a', 26a", 26m) from an access control device (12a-e) at the installation site (8); and
associating (47), for each access control device (12a-e) being a source access control device (12a-e) of at least one wireless transmission (26a, 26a', 26a", 26m) in the wireless reception data (25), the source access control device (12a-e) with a single install location (13a-e) of the possible install locations (13a-e), based on finding a possible install location in the sequence of image frames corresponding to a wireless transmission (26a, 26a', 26a", 26m) of the source access control device (12a-e).

2. The method according to claim 1, wherein the associating (47) comprises associating an identity of each source access control device (12a-e) with its associated install location (13a-e).

3. The method according to any one of the preceding claims, wherein the wireless reception data was received in a time period at least partly overlapping in time with when the sequence of image frames (21, 21a-n) was captured.

4. The method according to any one of the preceding claims, further comprising:
deriving (41) a map of at least part of the installation site based on the sequence of image frames (21, 21a-n); and
positioning (44) each of the found possible install locations (13a-e) on the map.

5. The method according to any one of claims 1 to 3, further comprising:
obtaining (42) a pre-generated map of the installation site, the pre-generated map comprising possible install locations; and
positioning (44) each of the found possible install locations (13a-e) on the map.

6. The method according to any one of the preceding claims wherein the sequence of image frames comprises time data for deriving a frame time (22) for each image frame, wherein the wireless reception data (25) comprises a time indicator associated with each wireless transmission of the wireless reception data (25), and wherein the associating (47) comprises comparing the frame times (22) of the image frames and the transmission time indication of the at least one wireless transmission of the source access control device (12a-e).

7. The method according to any one of the preceding claims, wherein at least one of the access control devices (12a-e) is an electronic lock, and at least one of the possible install locations (13a-e) is provided by an openable barrier (15a-e) whose openable state is controllable by an electronic lock (12a-e).

8. The method according to any one of the preceding claims, wherein the method is performed by a mobile acquisition device, the sequence of image frames (21, 21a-n) is captured by the acquisition device (2) and the wireless reception data (25) is based on wireless transmissions received by the acquisition device (2).

9. The method according to claim 8, further comprising
obtaining (46) positions and orientations of the acquisition device (2) for when the acquisition device captured the sequence of image frames (21, 21a-n) and received the wireless reception data (25); and
wherein the associating (47) is based on the obtained positions and orientations of the acquisition device (2).

10. The method according to any one of the preceding claims, further comprising, for at least one of the source access control devices (12a-e):
obtaining (48) configuration data to be applied for an access control device installed in the install location of the source access control device (12a-e); and
applying (50) configuration data to the source access control device (12a-e).

11. The method according to any one of the preceding claims, wherein the step of finding (43) possible install locations (13a-e) is based on a machine learning model that is pre-trained to recognise install location in image frames.

12. A configuration enablement device (1) for enabling configuration of access control devices (12a-e) at an installation site (8), the configuration enablement device (1) comprising:
processing circuitry (60); and
memory circuitry (64) storing instructions (67) that, when executed by the processing circuitry, cause the configuration enablement device (1) to:
obtain a sequence of image frames (21, 21a-n) captured at the installation site (8);
find, in the sequence of image frames (21, 21a-n), possible install locations (13a-e) for access control devices (12a-e);
obtain wireless reception data (25) being indicative of at least one wireless transmission (26a, 26a', 26a", 26m) from an access control device (12a-e) at the installation site (8); and
associate, for each access control device (12a-e) being a source access control device (12a-e) of at least one wireless transmission (26a, 26a', 26a", 26m) in the wireless reception data (25), the source access control device (12a-e) with a single install location (13a-e) of the possible install locations (13a-e), based on finding a possible install location in the sequence of image frames corresponding to a wireless transmission (26a, 26a', 26a", 26m) of the source access control device (12a-e).

13. A mobile acquisition device (2) comprising the configuration enablement device (1) according to claim 12.

14. A computer program (67, 91) for enabling configuration of access control devices (12a-e) at an installation site (8), the computer program comprising computer program code which, when executed on a configuration enablement device (1) causes the configuration enablement device (1) to:
obtain a sequence of image frames (21, 21a-n) captured at the installation site (8);
find, in the sequence of image frames (21, 21a-n), possible install locations (13a-e) for access control devices (12a-e);
obtain wireless reception data (25) being indicative of at least one wireless transmission (26a, 26a', 26a", 26m) from an access control device (12a-e) at the installation site (8); and
associate, for each access control device (12a-e) being a source access control device (12a-e) of at least one wireless transmission (26a, 26a', 26a", 26m) in the wireless reception data (25), the source access control device (12a-e) with a single install location (13a-e) of the possible install locations (13a-e), based on finding a possible install location in the sequence of image frames corresponding to a wireless transmission (26a, 26a', 26a", 26m) of the source access control device (12a-e).

15. A computer program product (64, 90) comprising a computer program according to claim 14 and a computer readable means comprising non-transitory memory in which the computer program is stored.
